# EUROPÄISCHE PATENTSCHRIFT

(11) **EP 3 419 409 B1**
(45) Veröffentlichungstag und Bekanntmachung des Hinweises auf die Patenterteilung: **18.08.2021**
(21) Anmeldenummer: 17706716.2
(22) Anmeldetag: 20.02.2017
(51) Int. Cl.: A01G 13/02, E04D 11/00

(54) **TROCKENLEGUNGSELEMENT FÜR PFLANZEN UND DESSEN VERWENDUNG**
DRAINING ELEMENT FOR PLANTS AND USE THEREOF
ÉLÉMENT DE DRAINAGE POUR PLANTS ET UTILISATION

(30) Priorität: 22.02.2016 DE 102016103065
(43) Veröffentlichungstag der Anmeldung: 02.01.2019
(73) Patentinhaber: Browa, Mario, 95179 Geroldsgrün (DE)
(72) Erfinder: Browa, Mario, 95179 Geroldsgrün (DE)
(74) Vertreter: Sperschneider, Alexandra
(86) Internationale Anmeldenummer: PCT/EP2017/053789
(87) Internationale Veröffentlichungsnummer: WO 2017/144412

(56) Entgegenhaltungen:
- EP-A1- 0 475 489
- EP-A1- 2 385 183
- EP-A1- 2 799 047
- DE-U1-202010 018 258
- US-B1- 6 272 707
- Colbond: "Enkadrain Drainage", , Juli 2008 (2008-07), XP002770643, Gefunden im Internet: URL:http://pdf.archiexpo.com/pdf/low-bonar /enkadrain/2105-26489-_12.html [gefunden am 2017-05-30]

## Beschreibung

Die Erfindung betrifft ein flächenartig ausgebildetes, textiles Trockenlegungselement zur Vermeidung von Staunässe bei Pflanzen sowie dessen Verwendung.

Bei der Anzucht von Pflanzen in Gärtnereien oder auch deren Präsentation in Fachmärkten erfolgt der großflächige Gießvorgang durch Überbrausen bzw. Fluten der Standflächen. Das überschüssige Wasser, welches nach dem Gießen häufig Zentimeter hoch steht, wird nach einem bestimmten Zeitintervall abgelassen oder fließt größtenteils selbstständig ab. Derartige Gießvorgänge bedingen allerdings Pfützenbildung, insbesondere bei unebenem Untergrund, und unerwünschte Staunässe zwischen Pflanzbehältnis und Untergrund. Aufgrund von Kapillar- und Kohäsionskräften kann das Gießwasser nicht vollständig zwischen Pflanzbehältnis und Untergrund ablaufen, so dass sich unterhalb des Pflanzbehältnisses stets Restwasser verbleibt. Diese Staunässe kann zu Mikrobenbildung und Wurzelfäulnis führen, wodurch die Pflanzen geschädigt werden und nicht mehr verkauft werden können. Häufig kann das Restwasser unterhalb des Pflanzbehältnisses auch aufgrund fehlender Luftzufuhr nicht eigenständig austrocknen.

Auch bei der Kultivierung von Pflanzen in Pflanzbehältnissen, wie beispielsweise Blumentöpfen aus Ton, Keramik oder Kunststoff, besteht grundsätzlich das Problem der Staunässe bei übermäßigem Gießen. Diese führt, wie oben bereits beschrieben, zu Wurzelfäulnis und Schädlingsbefall bzw. Schädlingsvermehrung. Auch hierdurch wird die Pflanze nachhaltig geschädigt und stirbt häufig vollständig ab.

Die gleiche Problematik der Staunässe ergibt sich auch bei Dachbegrünungen, wo bei nasser Witterung stets sichergestellt werden muss, dass das auftreffende Regenwasser vollständig abgeführt wird, um Wurzelfäulnis vorzubeugen und letztlich auch den Bewuchs und die Vegetation zu schützen. Zudem gilt es hier auch stets die Anforderungen der Traglast des jeweiligen Daches zu berücksichtigen.

Aus dem Stand der Technik sind Lösungen bekannt, welche als Pflanzsubstrat beispielsweise Tonkugeln oder welche Kies als Dränagematerial verwenden, um überschüssiges Gießwasser von den Wurzeln abzuführen. Diese Materialien erweisen sich aber gerade in der Anzucht von Pflanzen als nachteilig, da sie kostenintensiv sind. So müsste beispielsweise in einer Gärtnerei die komplette Beetlandschaft mit entsprechenden Tonkugeln ausgestattet werden. Dies bedingt eine enorme Kostenbelastung. Im Falle von Dachbegrünungen werden Kies und Vliesstoffe als Dränage eingesetzt. Insbesondere der Kies erweist sich aufgrund seines hohen Gewichtes als nachteilig für entsprechende Dachkonstruktionen. Hierdurch wird die Traglast deutlich beansprucht.

Aus EP 0 475 489 A1 ist eine mit Vegetation versehene Bodenabdeckung zum Bedecken von Böden und Gründungen bekannt, wobei die Bodenabdeckung ein durch eine Struktur zusammengehaltenes Nährmittelsubstrat mit darauf kultivierter Vegetation aufweist.

Aus der Broschüre "Enkadrain Drainage" ist ein doppelseitiges Vlies bekannt, das als Drainageelement verwendet werden kann.

Demzufolge liegt der vorliegenden Erfindung die Aufgabe zugrunde, Trockenlegungselement zur Verfügung zu stellen, welches ein geringes Eigengewicht aufweist und welches leicht verwendbar und verlegbar ausgebildet ist.

Diese Aufgabe wird gemäß den Merkmalen des Patentanspruches 1 gelöst.

Ein wesentlicher Punkt der Erfindung liegt darin, dass das flächenartig ausgebildete, textile Trockenlegungselement zur Vermeidung von Staunässe bei Pflanzen wenigstens eine 1. textile Lage zur Aufnahme von wenigstens einem Pflanzgefäß oder einem Pflanzsubstrat sowie wenigstens eine 2. textile Lage zum verbesserten Abführen einer Flüssigkeit aufweist, wobei die 2. textile Lage der 1. textilen Lage flächenartig gegenüberliegend angeordnet ist und zwischen 1. textiler Lage und 2. textiler Lage wenigstens ein flächenartiges Abstandselement angeordnet ist, welches die beiden Lagen fest miteinander verbindet. Besonders vorteilhaft ist das hier beschriebene Trockenlegungselement für Pflanzen ein Pflanzentrockenlegungselement.

Vorteilhaft ist das hier beschriebene Trockenlegungselement für Pflanzen aus textilen Fasern, vorteilhaft als Gewirk, ausgebildet. Hierbei ist es denkbar, dass 1. und 2. textile Lage aus dem gleichen Fasermaterial ausgebildet sind. Darüber hinaus ist es auch denkbar, dass diese beiden textilen Lagen aus unterschiedlichen Fasermaterialien zusammengesetzt sind. Vorteilhaft sind beide textile Lagen jeweils als Gewirk ausgebildet, welche über ein flächenartiges Abstandselement fest miteinander verbunden sind. Vorteilhaft ist das flächenartige Abstandselement derart ausgebildet, dass sich zwischen der 1. textilen Lage und der 2. textilen Lage Hohlräume ausbilden, über welche das Gießwasser vom Pflanzbehältnis oder Pflanzsubstrat weg abführbar ist.

Das Abstandselement beabstandet folglich die beiden textilen Lagen voneinander.

Besonders vorteilhaft ist das Trockenlegungselement als zuschneidbare, textile Matte ausgebildet, so das es je nach Anwendung einfach und schnell in seiner Größe anpassbar ist und sowohl in einem Pflanzbehältnis als auch unter einer Vielzahl an Pflanzbehältnissen angeordnet werden kann.

Insbesondere die textile Ausbildung des Trockenlegungselements ist von Vorteil, da sich hierdurch die gewünschte Formstabilität und zugleich aber auch Elastizität des Trockenlegungselements bedingt. Das hier beschriebene Trockenlegungselement ist biegsam ausgebildet und verbleibt vorteilhaft bei Kraftbeaufschlagung, insbesondere Druckkraftbeaufschlagung, im Wesentlichen in seiner Sollform, ohne dass es zu unerwünschter Deformation der Lagen und/oder des Abstandselements kommt. In der Sollform erfolgt die bestmögliche Dränagefunktion des Trockenlegungselements aufgrund der großvolumigen Hohlräume zwischen den beiden Lagen, welche durch das Abstandselement aufgespannt sind.

Das Abstandselement ist als wenigstens ein Abstandsfaden ausgebildet.

Es hat sich als vorteilhaft gezeigt, das Abstandselement als Abstandsfaden auszubilden, da dieser dem Trockenlegungselement Elastizität und Verformbarkeit verleiht. Unter Abstandsfaden ist hierbei wenigstens ein textiler Faden zu verstehen, welcher die 1. textile Lage mit der 2. textilen Lage fest verbindet. Als besonders vorteilhaft hat sich hierbei erwiesen, den Abstandsfaden als Monofil und/oder als Polfaden auszubilden. Das Monofil ist vorteilhaft endlos und einfädig ausgebildet und kann somit in einfacher Weise, ohne großen Herstellungsaufwand, zwischen den beiden textilen Lagen eingewirkt werden. Somit können Kosten eingespart werden.

Das Monofil ist vorteilhaft mit der 1. textilen Lage und mit der 2. textilen Lage verschlauft ausgebildet. Eine derartige Verschlaufung ist dahingehend vorteilhaft, da hierdurch eine feste Verbindung des Monofil mit den beiden textilen Lagen ausgebildet ist und sich zugleich, je nach Verschlaufungsgrad eine Vielzahl an vorteilhaft gekrümmt ausgebildeten Abstandsfadenabschnitten zwischen den beiden textilen Lagen ergeben. Dies ist sowohl herstellungstechnisch als auch kostentechnisch deutlich von Vorteil.

Je nach Verschlaufungsgrad ergibt sich die Anzahl der gekrümmten Abstandsfäden zwischen den beiden textilen Lagen. Wird beispielsweise ein hoher Verschlaufungsgrad gewählt, so resultiert auch eine hohe Anzahl an gekrümmten Abstandsfadenabschnitten, wohingegen ein geringer Verschlaufungsgrad eine entsprechend geringe Anzahl an gekrümmten Abstandsfehden bedingt. Folglich dient der Verschlaufungsgrad vorteilhaft dazu, insbesondere die Tragfähigkeit und Druckstabilität des textilen Trockenlegungselements zusätzlich zu der Abstandsfadenform zu beeinflussen.

Weitere vorteilhafte Ausführungsformen ergeben sich aus den Unteransprüchen.

Bei einer vorteilhaften Ausführungsform hat es sich als vorteilhaft gezeigt, wenn der wenigstens eine Abstandsfaden, vorteilhaft als Monofil ausgebildet, in seinem Verlauf zwischen 1. textiler Lage und 2. textiler Lage eine Schräge- und/oder eine Kurvenform aufweist. Hierdurch wird erreicht, dass 1. und 2. textile Lage gegeneinander verschiebbar und/oder bewegbar sind, ohne dass bei äußerer Kraftbeaufschlagung das Trockenlegungselement insgesamt beschädigt wird. Folglich ist der schräge und/oder kurvenförmige Verlauf des Abstandsfadens vorteilhaft für die zusätzliche Flexibilität und Elastizität des Trockenlegungselements, da hierdurch ein zusätzlicher Verschiebungsweg bereitgestellt wird. Ein möglicher Verlauf des Abstandsfadens ist beispielsweise ein Zick-Zackverlauf. Es ist auch denkbar, dass beispielsweise zwei Abstandsfäden vorgesehen sind, welche miteinander verkreuzt und an dem Kreuzungspunkt aneinander fixiert ausgebildet sind.

Wird beispielsweise ein Pflanzbehältnis auf das textile Trockenlegungselement aufgestellt, so ist es möglich, dass die 1. textile Lage entweder in ihrer Sollform verbleibt oder aber auch durch das Gewicht des Pflanzbehältnisses und der daraus resultierenden senkrecht nach unten gerichteten Kraftbeaufschlagung aus ihrer Sollform ausgelenkt und deformiert wird. Der wenigstens eine Abstandsfaden, vorteilhafter das Monofil, ermöglicht eine entsprechende Auslenkung aus der Sollform, gerade so weit, dass 1. textile Lage und 2. textile Lage kontaktfrei miteinander ausgebildet sind. Der wenigstens eine Abstandsfaden hält somit stets die 1. textile Lage und die 2. textile Lage getrennt voneinander, sodass auch bei einem schweren Pflanzbehältnis ein Kontakt von beiden Lagen miteinander verhindert wird.

Wird nun das entsprechende Pflanzbehältnis von dem textilen Trockenlegungselement entfernt, beispielsweise angehoben, so bedingt der wenigstens eine Endlosabstandsfaden die Rückführung des ausgelenkten textilen Trockenlegungselements in seine ursprüngliche Sollform. Vorteilhaft ist somit der wenigstens eine Endlosabstandsfaden, vorteilhaft ein Monofil, als Federelement ausgebildet, welches eine reversible Formänderung des Trockenlegungselements bei Kraftbeaufschlagung ermöglicht und dieses stets nach Kraftbeaufschlagungsende in seine Sollform zurückführt.

Durch die vorteilhafte Ausbildung des Abstandselements als wenigstens ein Endlosabstandsfaden sind zwischen 1. und 2. textiler Lage eine Vielzahl an Abstandsfadenabschnitten ausgebildet, welche beispielsweise eine Federfunktion aufweisen.

Es hat sich als vorteilhaft erwiesen, dass das Trockenlegungselement in seiner Sollform, also in seiner unveränderten Ausgangsform ohne Kraftbeaufschlagung, eine Materialstärke von insgesamt 1-400 mm aufweist. Besonders vorteilhaft hat sich eine Materialstärke im Bereich von 2-50 mm und noch vorteilhafter von 9 mm herausgestellt. Je nach Ausführungsform ist weiterhin denkbar, dass die 1. textile Lage von der 2. textilen Lage in der Sollform im Bereich von 2,5-300 mm, vorteilhafter von 10-40 mm beabstandet ist.

Vorteilhaft weist das wenigstens eine Monofil einen Durchmesser von 0,05 mm bis 3 mm auf. Die hier genannten Maße haben sich als vorteilhaft erwiesen, da hiermit der bestmögliche Trockenlegungseffekt zwischen Pflanzbehältnis und Untergrund erzielt werden kann.

Hierbei hat sich insbesondere die schräge und/oder gekrümmte Form des eingewirkten Abstandsfadens von Vorteil erwiesen, um nach Beendigung einer äußeren Kraftbeaufschlagung, beispielsweise bei Anheben eines Pflanzbehältnisses, dass Trockenlegungselement schnell und reversibel in seine Sollform zurückzuführen. Insbesondere hat sich hierbei ein sichelförmiger Verlauf als besonders vorteilhaft erwiesen, um die beiden Lagen nach Beendigung der Kraftbeaufschlagung schnell wieder in die Sollform des Trockenlegungselements zurückzuführen, da die gekrümmten Abstandsfadenabschnitte eine ausreichende Rückstellkraft aufweisen. Selbstverständlich ist zwischen den beiden Lagen nicht nur ein einziger derartiger Kurvenverlauf vorgesehen, sondern eine Vielzahl, vorteilhaft 50-500 sichelförmig ausgebildete Abstandsfadenabschnitte pro Quadratzentimeter, welche aus einem einzigen Monofil ausgebildet sind.

In einer weiteren vorteilhaften Ausführungsform hatte sich gezeigt, dass die aus Monofil ausgebildeten Abstandsfadenabschnitte mit der 2. textilen Lage einen Neigungswinkel im Bereich von 1° bis 130° ausbilden.

Bei der 2. textilen Lage handelt es sich vorteilhaft um die untere Lage, welche direkt auf dem Erdreich oder beispielsweise dem Pflanztisch oder auf der Dachfläche oder auf einem sonstigen Untergrund aufliegt. Insbesondere richtet sich der Neigungswinkel der Abstandsfadenabschnitte nach dem Verlauf der Abstandsfadenabschnitte. Bei einem gekrümmt ausgebildeten Verlauf der jeweiligen Abstandsfadenabschnitte hat es sich als vorteilhaft erwiesen, den Neigungswinkel zwischen Abstandsfadenabschnitt und 2. textiler Lage im Bereich von 1° bis 35° auszubilden. In diesem Bereich wird die erforderliche Rückstellkraft der Abstandsfadenabschnitte optimal ausgebildet, so dass die Sollform des Trockenlegungselements nach Ende der Kraftbeaufschlagung schnell und einfach wieder herstellbar ist. Sind die zwischen den beiden textilen Lagen angeordneten Abstandsfadenabschnitte in ihrem Verlauf sichelförmig ausgebildet, so weisen die Abstandsfadenabschnitte auch zur 1. textilen Lage vorteilhaft den gleichen Neigungswinkel wie zur 2. textilen Lage auf, also vorteilhaft einen Neigungswinkel im Bereich von 1° bis 35°. Als besonders vorteilhaft haben sich Neigungswinkel zu beiden textilen Lagen von 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35° erwiesen.

Selbstverständlich ist dies nicht begrenzend zu verstehen, sodass es auch möglich ist, dass bei sichelförmigen Abstandsfadenabschnitten die beiden Neigungswinkel zwischen 1. Lage und 2. Lage verschieden zueinander ausgebildet sind. Vorteilhaft sind jedoch auch in diesem Fall die beiden Neigungswinkel aus der oben ausgeführten Aufzählung auszuwählen. Besonders vorteilhaft entspricht die Sichelform der Abstandsfadenabschnitte der Sollform.

Ist der Verlauf der Abstandsfadenabschnitte schräg ausgebildet, so ist hier der Bereich von 35° bis 130° für den Neigungswinkel, vorteilhafter von 70° bis 110° und besonders vorteilhaft von 70°, 72°, 74°, 75°, 76°, 78°, 80°, 81°, 82°, 83°, 84°, 85°, 86°, 87°, 88°, 89°, 90°, 91°, 92°, 93°, 94°, 95°, 96°, 97°, 98°, 99°, 100°, 101°, 102°, 103°, 104°, 105°, 106°, 107°, 108°, 109°, 110°, ausgebildet.

Bei einem schrägen Verlauf der Abstandsfadenabschnitte zwischen den beiden Lagen ist es denkbar, dass die Abstandsfadenabschnitte stets parallel zueinander angeordnet sind, jeweils paarweise gekreuzt zueinander verlaufen oder auch jeweils quartettweise gekreuzt zueinander verlaufen. Unter quartettweise gekreuzt sind vorteilhaft insgesamt acht Abstandsfadenabschnitte zu verstehen, wobei jeweils vier Abstandsfadenabschnitte parallel zueinander angeordnet sind und sich die weiteren vier, ebenfalls parallel zueinander angeordneten, Abstandsfadenabschnitte mit den ersten vier Abstandsfadenabschnitten kreuzen. Die jeweiligen Kreuzungspunkte sind vorteilhaft im unteren Drittel der Abstandsfadenabschnitte, vorteilhaft näher an der 2. Lage als an der 1. Lage, vorgesehen. Dies ist von Vorteil, da hierdurch bei Kraftbeaufschlagung von außen, beispielsweise durch ein Pflanzbehältnis, die 1. textile Lage aus ihrer Ausgangsposition ausgelenkt wird und in Richtung der 2. Lage flächenartig verschoben wird. Die Kreuzungspunkte nahe der 2. Lage stellen sicher, dass kein Kontakt zwischen 1. und 2. Lage stattfindet. Ein derartiger Kontakt würde sich als nachteilig erweisen, da Gieß- oder Regenwasser nicht mehr wie gewünscht ablaufen kann und es sich unerwünschte Staunässe bildet.

Bei einer weiteren vorteilhaften Ausführungsform hat es sich zudem für die Formstabilität des Trockenlegungselements als vorteilhaft erwiesen, die Verschlaufungspunkte der Abstandsfadenabschnitte mit 1. textiler Lage und 2. textiler Lage zueinander deckungsgleich anzuordnen. Hierdurch wird insbesondere bei der sichelförmigen Ausbildung der Abstandsfadenabschnitte eine ausreichend hohe Rückstellkraft bewirkt, welche nach Kraftbeaufschlagung eine schnelle Rückführung in die Sollform des Trockenlegungselements ermöglicht. Sind die Abstandsfadenabschnitte allerdings schräg ausgebildet, so sind die Verschlaufungspunkte eines Abstandsfadens an 1. Lage und 2. Lage versetzt zueinander ausgebildet. In diesem Fall ist das Monofil in seinem Verlauf zwischen 1. textiler Lage und 2. textiler Lage als eine Zickzack-Form oder eine Sägezahnform ausgebildet.

Bei einer weiteren vorteilhaften Ausführungsform hat es sich gezeigt, dass es von deutlichem Vorteil ist, die 1. textile Lage wurzelwerkdurchdringungssicher auszubilden. Auf der 1. textilen Lage werden das Pflanzsubstrat und/oder die Pflanzbehältnisse zur Bewässerung abgestellt. Folglich hat diese 1. Lage stets direkt Kontakt zum Pflanzsubstrat und/oder Pflanzbehältnissen. Insbesondere beim Pflanzsubstrat, wie beispielsweise Erde, können die Pflanzenwurzeln ungehindert das Pflanzsubstrat durchdringen und wachsen. Um nun eine Beschädigung des Trockenlegungselements zu vermeiden, wird die 1. textile Lage wurzelwerkdurchdringungssicher ausgebildet. Somit kann verhindert werden, dass die Pflanzenwurzeln das Trockenlegungselement zerstören und unbrauchbar machen.

Auch bei Pflanzbehältnissen wachsen nach längerer Standzeit häufig die Wurzeln aus den unteren Öffnungen der Pflanzbehältnisse heraus. Durch die wurzelwerkdurchdringungssichere Ausbildung der 1. textilen Lage können die Pflanzbehältnisse, auch nach langen Standzeiten, stets einfach und direkt von dieser 1. textilen Lage entfernt werden, ohne dass sich die Pflanzenwurzeln in das Trockenlegungselement eingearbeitet haben und an diesem anhaften.

Hierzu hat es sich als vorteilhaft erwiesen, die 1. textile Lage besonders engmaschig auszubilden. Hierbei hat sich vorteilhaft eine Maschendichte von 50-300 Maschen pro Quadratzentimeter erwiesen. Besonders vorteilhaft wird eine Maschendichte von 250 Maschen pro Quadratzentimeter gewählt. Diese besondere Maschendichte verhindert einerseits das Eindringen der Pflanzenwurzeln und ermöglicht zum anderen eine ausreichend schnelle Abführung des Gießwassers oder Regenwassers.

Bei einer weiteren vorteilhaften Ausführungsform weist die 2. textile Lage Unterbrechungen auf. Vorteilhaft sind diese Unterbrechungen als regelmäßige Öffnungen ausgebildet. Diese haben sich als vorteilhaft erwiesen, da durch diese Unterbrechungen im Gewirk der Lage eine deutlich verbesserte und vor allem schnellere Wasserabführbarkeit von oben nach unten ermöglicht wird. Als besonders vorteilhaft hat sich eine hexagonale Anordnung der Unterbrechungen bzw. Öffnungen herausgestellt. Genau diese hexagonale Anordnung bedingt den ausreichenden, schnellen Austritt des von der 1. Lage abgeführten Gießwassers und/oder Regenwassers. Zudem bieten die Verbindungsstege zwischen den hexagonal angeordneten Unterbrechungen eine hohe Druckstabilität und Lastaufnahme im Falle einer Kraftbeaufschlagung.

Weiterhin sind auch vorteilhaft die Unterbrechungen selbst in einer hexagonale in Form ausgebildet. Die Kombination von hexagonaler Anordnung und hexagonaler Ausbildung der Unterbrechungen bietet die größtmögliche Tragfähigkeit und Drucksteifigkeit, sowie Scherstabilität über die gesamte Fläche der 2. textilen Lage. Besonders vorteilhaft sind sechs, zueinander hexagonal angeordnete hexagonale Unterbrechungen in einem Flächenbereich von 1 cm² bis 3 cm² vorgesehen, wobei die Abmessungen der Unterbrechungen im Bereich von 1-4 mm in der Breite und 1-10 mm in der Länge ausgebildet sind.

Selbstverständlich ist dies nicht begrenzend zu verstehen, so dass es auch denkbar ist, insbesondere bei Dachbegrünungen deutlich größere Abmessungen der Unterbrechungen vorzusehen, so dass die Unterbrechungen in einem Flächenbereich von 25 cm² bis 50 cm² Abmessungen im Bereich von 5 mm bis 50 mm in der Breite und 10 mm bis 80 mm in der Länge aufweisen.

Selbstverständlich ist auch denkbar, dass die Unterbrechungen in ihrer Breite und in ihrer Länge die gleiche Erstreckung aufweisen. Auch hierfür gelten die bereits oben genannten Abmessungen.

Dies ist selbstverständlich nicht begrenzend zu verstehen, so dass es auch möglich ist, die Unterbrechungen polygonal wie beispielsweise rund, rechteckig, oval, rautenförmig, quadratisch, dreieckig oder in einer sonstigen polygonalen Form auszubilden. Insbesondere die runde Ausbildung der Unterbrechungen weist ebenfalls sehr guten Wasserabführungseigenschaften auf.

Folglich weist eine besonders vorteilhafte Ausführungsform des Trockenlegungselements für eine erfolgreiche, dauerhafte Vermeidung von Staunässe unter Pflanzbehältnissen und/oder unterhalb eines Pflanzsubstrats die wurzelwerkdurchdringungssichere Ausbildung der 1. textilen Lage sowie die flächenmäßige Anordnung von Unterbrechungen, vorteilhaft in hexagonaler und/oder runder Form, in der 2. textilen Lage auf. Ergänzt wird die schnelle und dauerhafte Wasserabführung durch das Endlosmonofil, welches in Form einer Vielzahl an Abstandsfadenabschnitten zwischen den beiden Lagen ausreichende Luftzirkulation und Wasserabführung ermöglicht.

Es ist ferner auch denkbar, die 2. untere Lage als geschlossene Textillage auszubilden, also ohne Unterbrechungen, so dass sich eine engmaschige untere 2. Lage ergibt. Vorteilhaft können auch 1. und 2. Lage in ihrer Beschaffenheit gleich ausgebildet sein, beispielsweise als engmaschige, geschlossene Textillage.

Bei einer weiteren vorteilhaften Ausführungsform hat es sich zudem als vorteilhaft erwiesen, dass Trockenlegungselement zumindest teilweise beheizbar auszubilden und/oder dass das Trockenlegungselement eine Drucksteifigkeit von 10 kg/Quadratdezimeter bis 100 kg/Quadratdezimeter aufweist.

Insbesondere das Vorsehen einer Heizfunktion ist in Gärtnereien von Vorteil, wenn das Gießwasser möglichst schnell von den Pflanzbehältnissen abgezogen werden muss. Hierzu hat es sich als vorteilhaft erwiesen, dass neben dem oben beschriebenen Monofil, welches die Abstandsfadenabschnitte und folglich auch die Hohlräume zwischen den beiden textilen Lagen ausbildet, ein zusätzlicher Heizfaden, welcher beispielsweise ebenfalls als Monofil ausgebildet ist, vorgesehen ist.

Dieser Heizfaden enthält vorteilhaft Kohlenstoff und/oder weist einen kohlenstoffhaltigen Kern auf, welcher mit einem nicht-leitfähigen Kunststoff, beispielsweise Polypropylen, Polyethylen oder dgl. beschichtet ist. Ein derartiger Heizfaden hat sich als vorteilhaft erwiesen, da dieser mit einem Netzteil und/oder einer Batterie, vorteilhaft mit 12 V, schnell und einfach thermisch erwärmt werden kann, ohne dass die Gefahr eines Stromschlags besteht. Der den Kohlenstoff umgebende Kunststoff wirkt isolierend. Dies ist insbesondere für die Bedienungssicherheit und die Sicherheit gegenüber Wasser von Bedeutung.

Durch die Erwärmung des Heizfadens, welcher vorteilhaft ebenfalls fest mit der 1. textilen Lage und der 2. textilen Lage verbunden, beispielsweise verschlauft oder verknüpft ist, wird stehendes Wasser zwischen den beiden Lagen erwärmt und verdampft. Somit wird die Abführung des Gieß- oder Regenwassers beschleunigt. Darüber hinaus können hierdurch auch Bereiche des Erdreichs von Schnee und Eis befreit und dauerhaft freigehalten werden.

Selbstverständlich ist dies nicht begrenzend zu verstehen, sodass es auch denkbar ist, den Heizfaden auch innerhalb der 1. textilen Lage und/oder der 2. textilen Lage zusätzlich mit zu verweben und/oder zu verstricken, so dass nicht nur der Abstandsbereich zwischen den beiden Lagen temperierbar ist, sondern auch die beiden textilen Lagen selbst erwärmt werden können. Dies dient zur schnelleren Trocknung.

Im einfachsten Ausführungsbeispiel bildet der durchgängig ausgebildete Heizfaden zwischen den beiden Lagen Heizfadenabschnitte aus. Diese können die gleiche Geometrie aufweisen wie die oben bereits beschriebenen Abstandsfadenabschnitte oder aber auch von der Geometrie zu diesen verschieden ausgebildet sein.

So ist denkbar, dass die Abstandsfadenabschnitte sichelförmig ausgebildet sind, während die Heizfadenabschnitte zwischen den beiden Lagen eine Zick-Zack-Form oder eine Sägezahnform ausbilden oder umgekehrt. Ferner ist auch denkbar, dass die Abstandsfadenabschnitte eine Wellenform ausbilden, während die Heizfadenabschnitte jeweils eine Sichelform ausbilden. Als besonders effektiv zur schnellen Trocknung haben sich Verhältnisse von Abstandsfadenabschnitten zu Heizfadenabschnitten zwischen erster und zweiter textiler Lage von 95:5 bis 55:45 erwiesen. Dies stellt sicher, dass das Wasser ausreichend schnell abgeführt wird und zugleich aber keine unerwünschte Temperierung der Pflanzbehältnisse und/oder des Pflanzsubstrats erfolgt. Grundsätzlich hat sich gezeigt, dass größer die Anzahl an vorgesehenen Heizfadenabschnitten zwischen beiden Lagen ist, desto größer ist die Temperaturbeaufschlagung und desto wärmer wird das Trockenlegungselement.

Ferner ist von Vorteil, dass das Trockenlegungselement eine vorbestimmte Drucksteifigkeit aufweist, so dass bei äußerer Kraftbeaufschlagung, wie bereits oben erwähnt, zwar die 1. textile Lage aus ihrer Sollform ausgelenkt wird und in Richtung der 2. textilen Lage verschoben wird. Allerdings ist die Drucksteifigkeit stets so bemessen, dass auch bei Kraftbeaufschlagung, beispielsweise durch das Absetzen eines Pflanzbehältnisses, die beiden textilen Lagen stets kontaktfrei zueinander ausgebildet sind und die Abstandsfadenabschnitte dies stets sicherstellen.

Darüber hinaus ist das hier beschriebene Trockenlegungselement in Gärtnereien, beispielsweise auf Gießtischen, innerhalb von Pflanzgefäßen als Dränage, unter Rollrasen, beispielsweise bei Fußballfeldern, wo eine schnelle Entwässerung nach einem Regenschauer dringend notwendig ist, bei der Aufzucht von Rollrasen, bei Fußballfeldern zur Trockenlegung, bei der Dachbegrünung, wo eine gewisse Traglast des Daches nicht überschritten werden darf und Regenwasser ebenfalls schnell abzuführen ist, sowie als Abtropfelement im Hausgebrauch, beispielsweise für nasse Schuhe oder nasses Werkzeug, zu verwenden. Darüber hinaus kann das hier beschriebene Trockenlegungselement als Staunässeschutz im Bauwesen, beispielsweise beim Verbau von feuchtigkeitsempfindlichen Materialien (Holz, etc.) im Erdreich, oder auch beim Transport oder der Lagerung von Gegenständen verwendet werden. Eine weitere Verwendung des hier beschriebenen Trockenlegungselements ist als Liegefläche, vorteilhaft beheizbar, für Haustiere oder als Sportmatte. Weiterhin kann das hier beschriebene Trockenlegungselement im Erdreich von Sportplätzen, beispielsweise unterhalb der Rasenflächen, horizontal und/oder vertikal angeordnet, Verwendung finden.

Ferner ist eine Verwendung des hier beschriebenen Trockenlegungselements mit Heizfaden, vorteilhafter des Pflanzentrockenlegungselements mit Heizfaden, als Auflage für Wege und Eingangsbereiche, um diese im Winter schnee- und eisfrei zu halten, als Vorlegematte für Wohnmobile, als Unterlage für Swimmingpools oder Kinderplanschbecken, als Tierauflage sowie an Außenwänden von Hochbeeten zur Vermeidung von Staunässe vorteilhaft.

Als Materialien für das hier beschriebene Trockenlegungselement werden vorteilhaft wasserabweisende Kunststoffe verwendet, welche als Textilfäden ausgebildet sind. Es ist denkbar, dass 1. textile Lage und 2. textile Lage sowie das Monofil aus dem gleichen Kunststoff ausgebildet sind. Es ist aber auch denkbar, dass die 1. textile Lage aus einem anderen Kunststoff besteht als die 2. textile Lage oder aus einem anderen Kunststoff besteht wie das Monofil. Vorteilhaft ist das Monofil aus einem thermoplastischen Kunststoff aus der Gruppe Polypropylen, Polyethylen, Polyethylenterephthalat, Polyester, Polyethersulfon und/oder einer Kombination hieraus ausgewählt. Ferner ist denkbar, das wenigstens eine Monofil aus wenigstens einer anorganischen Faser, beispielweise aus Glasfasern, Graphen, auszubilden.

Ferner ist es auch denkbar, neben den bereits beschriebenen Abstandsfadenabschnitten und/oder dem wenigstens einen kohlenstoffhaltige Heizfaden, eine weitere Art an Faden zwischen der 1. textilen Lage und der 2. textilen Lage vorgesehen ist, insbesondere dann, wenn eine gleichbleibende Bewässerung unter Verhinderung von Staunässe gewünscht ist. Diese Ausführungsform ist insbesondere für Trockenlegungselemente innerhalb Pflanzbehältnissen verwendbar und geeignet. In diesem Fall sind zwischen der 1. textilen Lage und der 2. textilen Lage neben den aus Monofil ausgebildeten Abstandsfadenabschnitten und den Heizfadenabschnitten, wie oben beschrieben, wasserleitende Abstandsfadenabschnitte vorgesehen, welche eine vorbestimmte, gleichbleibende Feuchtigkeit der Pflanzenwurzeln sicherstellen. Derartige wasserleitende Abstandsfäden können auch aus einem weiteren Monofil ausgebildet sein.

Besonders vorteilhaft haben sich bei den wasserleitenden Abstandsfäden Naturmaterialien, wie beispielsweise Bast, erwiesen. Sind die wasserleitenden Abstandsfadenabschnitte aus Kunststoff ausgebildet, so ist der Kunststoff hygroskopisch, beispielsweise aus Polyamid, ausgebildet.

Weiterhin ist das hier beschriebene Trockenlegungselement verzugsfrei, langlebig, UV-beständig, formstabil bei Beanspruchung durch senkrechtem Druck, waschbar bis 60 °C sowie witterungsbeständig und Chemikalien beständig ausgebildet.

Vorteile und Zweckmäßigkeiten sind der nachfolgenden Beschreibung in Verbindung mit der Zeichnung zu entnehmen. Hierbei zeigen:
- Fig. 1: einen schematischen Querschnitt einer 1. Ausführungsform des Trockenlegungselements;
- Fig. 2: einen weiteren schematischen Querschnitt einer weiteren Ausführungsform des Trockenlegungselements;
- Fig. 3: einen weiteren schematischen Querschnitt einer weiteren Ausführungsform des Trockenlegungselements;
- Fig. 4: eine schematische Draufsicht auf eine Ausführungsform der 2. textilen Lage; und
- Fig. 5: eine schematische Draufsicht auf eine weitere Ausführungsform der 2. textilen Lage.

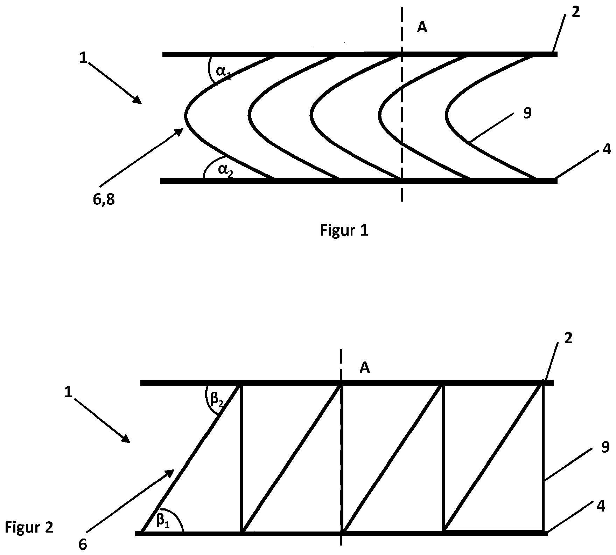

In Figur 1 ist ein schematischer Querschnitt eines Trockenlegungselements 1 gezeigt. Die 1. textile Lage 2 bildet die Oberseite des Trockenlegungselements 1. Auf diese Oberseite kann beispielsweise ein Pflanzbehältnis oder Pflanzsubstrat aufgebracht werden.

Demgegenüber liegend ist die 2. textile Lage 4 ausgebildet. Beide Lagen 2,4 sind über ein Abstandselement 6 voneinander beabstandet angeordnet. In diesem gezeigten Ausführungsbeispiel ist das Abstandselement 6 als Monofil vorgesehen, welches als Endlosfaden mit den beiden Lagen 2,4 fest verbunden ist. Das als Monofil ausgebildete Abstandselement 6 weist eine Vielzahl an Abstandsfadenabschnitten 9 auf, welche einen gekrümmten, vorteilhaft einen sichelförmigen, Verlauf beschreiben. Die Abstandsfadenabschnitte 9 sind vorteilhaft zueinander im gleichen Abstand und im gleichen Krümmungsverlauf angeordnet.

Wie die gestrichelte Linie A zeigt, sind die Abstandsfadenabschnitte 9 über Verschlaufungen mit der 1. textilen Lage 2 und der 2. textilen Lage 4 verwirkt. Die Verschlaufungen sind hierbei übereinander und folglich deckungsgleich zueinander ausgebildet. Besonders vorteilhaft hat es sich erwiesen, die Neigungswinkel α₁ und α₂ gleich groß vorzusehen. Hierbei hat sich für die erforderliche Laststabilität und die bei Kraftbeaufschlagung notwendige Rückstellkraft ein Neigungswinkelbereich von 5-35° als günstig erwiesen.

Wird ein Gegenstand, wie beispielsweise ein Pflanzbehältnis oder ein Werkzeug, auf der oberen, 1. textile Lage 2 abgestellt, so werden die Abstandsfadenabschnitte 8 mit einer senkrecht nach unten wirkenden Kraft beaufschlagt und deformiert. Die obere, 1. textile Lage 2 wird zumindest teilweise in Richtung der unteren, 2. textilen Lage 4 verschoben. Es erfolgt eine Auslenkung aus der ursprünglichen in Figur 1 gezeigten Sollform unter Komprimierung der Abstandsfadenabschnitte, so dass sich deren Krümmung noch zusätzlich verstärkt.

Wird nun der Gegenstand wieder entfernt, so ist auf Grund des Neigungswinkels sowie des gekrümmten Verlaufes der Abstandsfadenabschnitte 9 zwischen den beiden Lagen 2,4 eine ausreichende Rückstellkraft vorgesehen, um die 1. textile Lage wieder von der 2. textilen Lage weg zu führen und in die Sollform zurückzuführen.

In Figur 2 ist eine weitere Ausführungsform des Trockenlegungselements 1 gezeigt. Auch hier ist die obere, 1. textile Lage 2 durch wenigstens ein Abstandselement 6 von der unteren, 2. textilen Lage 4 beabstandet angeordnet. Auch hier ist das Abstandselement 6 vorteilhaft als Endlosmonofil ausgebildet, welches eine Vielzahl an Abstandsfadenabschnitte 9 zwischen den beiden Lagen 2,4 aufweist. In Figur 2 sind die Abstandsfadenabschnitte 8 nunmehr schräg und senkrecht vorgesehen, wobei auch hier anhand der gestrichelten Linie A ersichtlich ist, dass die Verschlaufungspunkte der Abstandsfadenabschnitte 9 an der oberen, 1. textilen Lage 2 und an der unteren, 2. textilen Lage 4 deckungsgleich einander gegenüberliegend angeordnet sind.

Darüber hinaus bilden die Abstandsfadenabschnitte 9 ein Sägezahnprofil aus. Auch diese Anordnung hat sich als vorteilhaft für eine ausreichende Rückstellkraft und eine ausreichende Laststabilität erwiesen. Vorteilhaft sind die Neigungswinkel β₁ und β₂ ebenfalls gleich groß ausgebildet und liegen im Bereich von 50-80°.

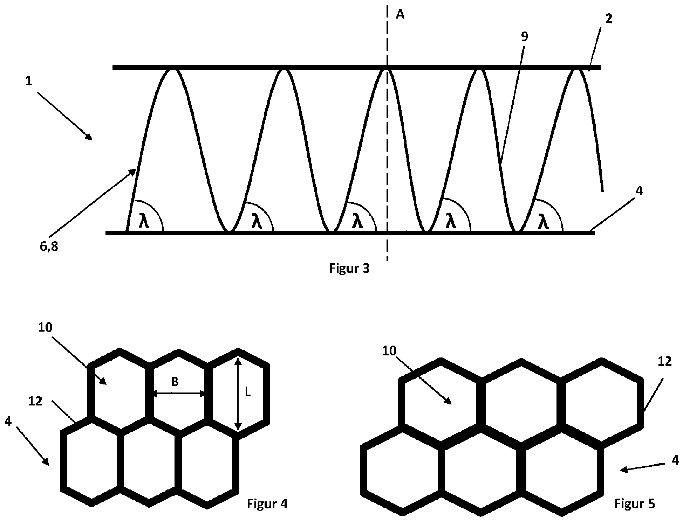

In Figur 3 ist eine weitere Ausführungsform eines schematischen Querschnitts eines Trockenlegungselements 1 gezeigt, wobei hier die obere, 1. textile Lage 2 und die untere, 2. textile Lage 4 durch Abstandsfadenabschnitte 8 voneinander beabstandet angeordnet sind. Die Abstandsfadenabschnitte 9, weisen in diesem Ausführungsbeispiel einen parabolischen, sich wiederholenden Querschnitt auf. Anhand der gestrichelten Linie A ist ersichtlich, dass in dieser Ausführungsform des Trockenlegungselements 1 die Verschlaufungspunkte der beiden Lagen 2,4 versetzt zueinander angeordnet sind. Vorteilhaft ist der Neigungswinkel λ der parabolischen Abstandsfadenabschnitte 9 im Bereich von 70-110° ausgebildet.

In den Figuren 4 und 5 ist eine schematische Draufsicht auf die untere, 2. textile Lage 4 gezeigt, wobei hier insbesondere auf die Unterbrechungen 10 hingewiesen wird. Die Unterbrechungen 10 sind als Öffnungen wasserdurchlässig ausgebildet und werden durch die Stege 12 stabilisiert. Die Stege 12 dienen zudem auch der Fixierung der Abstandsfadenabschnitte 9 (nicht gezeigt). Je nach gewünschter Laststabilität und Wasserabführungsgeschwindigkeit können die Unterbrechungen 10 in ihrer Geometrie variabel ausgebildet sein. So zeigt beispielsweise Figur 4 ein hexagonales Gitter von Unterbrechungen 10 und Stegen 12, wobei die Unterbrechungen 10 in ihrer Breite B geringer ausgebildet sind als in ihrer Länge L.

In Figur 5 hingegen ist ein symmetrisches, hexagonales Gitter von Unterbrechungen 10 und Stegen 12 gezeigt, wo die Unterbrechungen 10 in ihrer Breite B und in ihrer Länge L gleich lang vorgesehen sind. Dies ist selbstverständlich nicht begrenzen zu verstehen, sodass es auch denkbar ist, dass die Unterbrechungen 10 in ihrer Breite B größer ausgebildet sind als in ihrer Länge L. Darüber hinaus können auch rechteckige, quadratische, kreisförmige oder sonstige polygonale Unterbrechungen 10 vorgesehen sein. Bei der Kreisform hat sich ein Durchmesser von 0,5 cm bis 10 cm, vorteilhafter von 1,5 cm oder 6 cm erwiesen.

### Bezugszeichenliste

- 1: Trockenlegungselement
- 2: obere, 1. textile Lage
- 4: untere, 2. textile Lage
- 6: Abstandselement
- 8: Abstandsfaden
- 9: Abstandsfadenabschnitte
- 10: Unterbrechungen
- 12: Stege

## Patentansprüche

1. Flächenartig ausgebildetes, textiles Trockenlegungselement (1) zur Vermeidung von Staunässe bei Pflanzen, wenigstens aufweisend eine erste textile Lage (2) zur Aufnahme von wenigstens einem Pflanzgefäß oder einem Pflanzsubstrat sowie wenigstens eine zweite textile Lage (4) zum verbesserten Abführen einer Flüssigkeit, welche der ersten textilen Lage (2) flächenartig gegenüberliegend angeordnet ist, wobei zwischen erster textiler Lage (2) und zweiter textile Lage (4) wenigstens ein Abstandselement (6) angeordnet ist, welches die beiden Lagen (2,4) fest miteinander verbindet, wobei das Abstandselement (6) als wenigstens ein Abstandsfaden (8) ausgebildet ist,
**dadurch gekennzeichnet, dass**
der wenigstens eine Abstandsfaden (8) mit der ersten textilen Lage (2) und mit der zweiten textilen Lage (4) verschlauft ausgebildet ist.

2. Trockenlegungselement nach Anspruch 1,
**dadurch gekennzeichnet, dass**
der wenigstens eine Abstandsfaden (8) in seinem Verlauf zwischen erster textiler Lage (2) und zweiter textiler Lage (4) eine Schräge- oder eine Kurvenform aufweist.

3. Trockenlegungselement nach Anspruch 2,
**dadurch gekennzeichnet, dass**
die Abstandsfadenabschnitte (8) mit der zweiten textilen Lage (4) einen Neigungswinkel von 5° bis 130° ausbilden.

4. Trockenlegungselement nach wenigstens einem der vorangegangenen Ansprüche,
**dadurch gekennzeichnet, dass**
die Verschlaufungspunkte von Abstandsfaden (8) und erster textiler Lage (2) und Abstandfaden (8) und zweiter textiler Lage (4) zueinander deckungsgleich angeordnet sind.

5. Trockenlegungselement nach Anspruch 1,
**dadurch gekennzeichnet, dass**
die erste textile Lage (2) wurzelwerkdurchdringungssicher ausgebildet ist.

6. Trockenlegungselement nach Anspruch 1,
**dadurch gekennzeichnet, dass**
die zweite textile Lage (4) Unterbrechungen (10) aufweist.

7. Trockenlegungselement nach Anspruch 1,
**dadurch gekennzeichnet, dass**
das Trockenlegungselement (1) zumindest teilweise beheizbar ausgebildet ist und/oder dass das Trockenlegungselement (1) eine Drucksteifigkeit von 1 bis 100 kg/dm² aufweist.

8. Verwendung des Trockenlegungselements (1) nach einem der Ansprüche 1-7 in Gärtnereien, in Pflanzgefäßen, unter Rollrasen, bei der Dachbegrünung, sowie als Abtropfelement im Hausgebrauch für nasse Schuhe, nasses Werkzeug.

## Claims

1. Textile drainage element (1) of areal form for avoidance of waterlogging at plants, comprising at least one first textile layer (2) for accepting at least one plant container or plant substrate and at least one second textile layer (4), which is arranged to be areally opposite the first textile layer (2), for improved drainage of a liquid, wherein at least one spacer element (6) is arranged between first textile layer (2) and second textile layer (4) which fixedly connects the two layers (2, 4) together, wherein the spacer element (6) is constructed as at least one spacer thread (8),
**characterized in that**
the at least one spacer thread (8) is formed to be looped with the first textile layer (2) and with the second textile layer (4).

2. Drainage element according to claim 1,
**characterized in that**
the least one spacer thread (8) and has an oblique or a curved form in its path between first textile layer (2) and second textile layer (4).

3. Drainage element according to claim 2,
**characterized in that**
the spacer thread sections (8) form together with the second textile layer (4) an angle of inclination of 5° to 130°.

4. Drainage element according to at least one of the preceding claims,
**characterized in that**
the looping points of spacer thread (8) with first textile layer (2) and spacer thread (8) with second textile layer (4) are arranged to be congruent with one another.

5. Drainage element according to claim 1,
**characterized in that**
the first textile layer (2) is formed to be impenetrable by root systems.

6. Drainage element according to claim 1,
**characterized in that**
the second textile layer (4) has interruptions (10).

7. Drainage element according to claim 1,
**characterized in that**
the drainage element (1) is constructed to be at least partly heatable and/or that the drainage element (1) has a pressure resistance of 1 to 100 kilograms per square decimetre.

8. Use of the drainage element (1) according to one of the claims 1-7 in nurseries, in plant pots, under turf, in roof greenery and as a drip catcher in domestic use for wet shoes and wet implements.

## Revendications

1. Élément d'assèchement (1) textile conçu avec une forme plate, destiné à éviter des engorgements hydriques par les plantes, présentant au moins une première couche textile (2) pour recevoir au moins un récipient de plantation ou un substrat de plantation ainsi qu'au moins une seconde couche textile (4) pour améliorer l'évacuation d'un liquide, laquelle est agencée avec une forme plate à l'opposé de la première couche textile (2), dans lequel au moins un élément d'espacement (6) est agencé entre la première couche textile (2) et la seconde couche textile (4), lequel relie fermement ensemble les deux couches (2, 4), dans lequel l'élément d'espacement (6) est conçu en tant qu'au moins un fil d'espacement (8),
**caractérisé en ce que**
le au moins un fil d'espacement (8) est conçu enchevêtré avec la première couche textile (2) et avec la seconde couche textile (4).

2. Élément d'assèchement selon la revendication 1,
**caractérisé en ce que**
le au moins un fil d'espacement (8) présente une forme inclinée ou courbe dans son déroulement entre la première couche textile (2) et la seconde couche textile (4).

3. Élément d'assèchement selon la revendication 2,
**caractérisé en ce que**
les sections de fil d'espacement (8) forment un angle d'inclinaison de 5° à 130° avec la seconde couche textile (4).

4. Élément d'assèchement selon au moins l'une des revendications précédentes,
**caractérisé en ce que**
les points d'enchevêtrement de fils d'espacement (8) et de la première couche textile (2) et de fils d'espacement (8) et de la seconde couche textile (4) sont agencés les uns par rapport aux autres de façon superposable.

5. Élément d'assèchement selon la revendication 1,
**caractérisé en ce que**
la première couche textile (2) est conçue de façon à empêcher toute pénétration radiculaire.

6. Élément d'assèchement selon la revendication 1,
**caractérisé en ce que**
la seconde couche textile (4) présente des interruptions (10).

7. Élément d'assèchement selon la revendication 1,
**caractérisé en ce que**
l'élément d'assèchement (1) est conçu de façon à pouvoir être au moins partiellement chauffé et/ou **en ce que** l'élément d'assèchement (1) présente une rigidité à la compression de 1 à 100 kg/dm².

8. Utilisation de l'élément d'assèchement (1) selon l'une des revendications 1 à 7 dans des exploitations horticoles, dans des récipients de plantation, sous des gazons en rouleau, pour la végétalisation de toiture, ainsi qu'en tant qu'élément d'égouttage pour un usage domestique pour des chaussures mouillées, un outillage mouillé.
